**Europäisches Patentamt**

**European Patent Office**

**Office européen des brevets**

(19)

(11) Veröffentlichungsnummer: **0 230 905 B1**

(12) **EUROPÄISCHE PATENTSCHRIFT**

(45) Veröffentlichungstag der Patentschrift: **11.03.92**

(51) Int. Cl.⁵: **B29C 51/14**

(21) Anmeldenummer: **87100386.9**

(22) Anmeldetag: **14.01.87**

(54) **Verfahren zur Herstellung eines gefärbten, umgeformten Kunststoffteils.**

(30) Priorität: **28.01.86 DE 3602415**

(43) Veröffentlichungstag der Anmeldung:
**05.08.87 Patentblatt 87/32**

(45) Bekanntmachung des Hinweises auf die Patenterteilung:
**11.03.92 Patentblatt 92/11**

(84) Benannte Vertragsstaaten:
**AT BE CH DE FR GB IT LI NL SE**

(56) Entgegenhaltungen:
**FR-A- 2 548 576**
**US-A- 4 202 663**

(73) Patentinhaber: **Röhm GmbH**
**Kirschenallee Postfach 4242**
**W-6100 Darmstadt 1(DE)**

(72) Erfinder: **Hanstein, Friedrich**
**Darmstädter Strasse 66**
**W-6112 Gross-Zimmern(DE)**
Erfinder: **Krautter, Jürgen**
**Carl-Ullrich-Strasse 55**
**W-6100 Darmstadt(DE)**

## Beschreibung

Die Erfindung betrifft ein Verfahren zur Herstellung eines gefärbten, umgeformten Kunststoffteils durch Erhitzen einer ebenen Tafel aus Kunststoff, die auf wenigstens einer Seite mit einer abziehbar haftenden, im erwärmten Zustand dehnbaren Kunstoffolie beschichtet ist, auf die Formungstemperatur der Tafel, Umformen der Tafel unter gleichzeitiger Umformung der daran haftenden Folie und Abkühlen des umgeformten Kunststoffteils unter die Formungstemperatur.

Ein gattungsmäßiges Umformverfahren ist aus DE 27 18 510 bekannt. Bei diesem Verfahren wird eine gegossene Tafel aus Polymethylmethacrylat mit einer Polyäthylenfolie abziehbar beschichtet, auf Verformungstemperatur erwärmt und zusammen mit der daran haftenden Folie umgeformt und abgekühlt. Danach kann die Folie abgezogen oder zum Schutze der Oberfläche bis zur weiteren Verarbeitung oder bis zur Verwendung auf dem umgeformten Teil belassen werden.
Bei diesem Verfahren können auch farbige oder gemusterte Tafeln aus Polymethylmethacrylat verarbeitet werden. In diesem Falle kann die Polyäthylenfolie erst aufgebracht werden, wenn die Tafel mit der gewünschten Färbung oder Musterung versehen worden ist. Dazu kann z.B. das Transferdruckverfahren gemäß DE-OS 32 44 355 angewendet werden. Ungefärbte bzw. ungemusterte Tafeln aus Polymethylmethacrylat werden unmittelbar nach der Herstellung zum Schutz ihrer Oberfläche mit einer Schutzbeklebung versehen, die entfernt wird, bevor die Tafel durch das Transferdruckverfahren oder auf andere Weise gefärbt oder gemustert wird.

Das Abziehen der Schutzschicht vor der Färbung oder Musterung und die erneute Beschichtung mit einer Schutzbeklebung nach diesem Arbeitsgang ist wenig wirtschaftlich. In der noch unveröffentlichten deutschen Patentanmeldung P 35 36 061.5 wird der Transferdruck auf folienbeschichtete Kunststofftafeln beschrieben, wobei der Farbstofftransfer von einem flächigen Farbträger durch die Folie hindurch auf die Oberfläche der Kunststofftafel erfolgt.

Aus DE-A 33 24 709 ist ein Verfahren bekannt, bei dem eine thermisch erwärmte Kunststofftafel gleichzeitig umgeformt und durch Transferdruck gefärbt wird. Bei diesem Verfahren wird die Tafel mittels eines Werkzeugs umgeformt, das mit einem flächigen Transferfarbstoffträger belegt ist. Dieses Verfahren läßt die Herstellung von sphärisch geformten gefärbten Formteilen nicht oder nur mit der Einschränkung zu, daß der flächige Farbträger vorher in die entsprechende sphärische Form gebracht werden muß.

Der Erfindung liegt die Aufgabe zugrunde, das gattungsmäßige Verfahren dahingehend zu verbessern, daß ein getrennter Arbeitsgang der Färbung oder Musterung vermieden und der Bedarf an Energie und Hilfsmaterial eingeschränkt wird.

Dieses Ziel wird erfindungsgemäß dadurch erreicht, daß bei dem Umformverfahren eine Kunststofftafel eingesetzt wird, die mit einer Transferfarbstoff enthaltenden, abziehbar haftenden Folie beschichtet ist und während des Erhitzens der Tafel auf die Formungstemperatur und/oder des Umformens Farbstoff von der Folie auf die Oberfläche der Tafel übertragen wird. In der Regel findet der Farbstofftransfer zum überwiegenden Teil während der Aufzeizung der Kunststofftafel auf die Formungstemperatur statt, kann aber auch während des Umformvorganges selbst noch andauern. Wenn die Folie unter Anwendung von Wärme auf die Kunststofftafel aufgebracht wird, kann schon dabei ein Teil des Farbstoffes übertragen werden. Da infolge der haftenden Verbindung keine Verschiebung der Folie gegenüber der Tafel eintritt, ist es für den Erfolg des Verfahrens nicht kritisch, bei welchem Verfahrensschritt die Hauptmenge der Farbe übertragen wird. Selbst die bei der Umformung auftretenden Dehnungen führen nicht zu unscharfer Musterübertragung, weil die haftende Folie zusammen mit der Tafel gedehnt wird.

Das Verfahren der Erfindung führt in einem einzigen Arbeitsschritt von einem ungefärbten ebenen Kunststoffmaterial zu einem gefärbten, dreidimensional geformten Kunststofformkörper. Während die Kunststofftafel nach den bisher angewendete Verfahren sowohl für das Transferdruckverfahren als auch zum Umformen erwärmt werden mußte, wird sie erfindungsgemäß nur noch einmal erhitzt. Weiterhin übernimmt der Farbträger der Transferdruckstufe gleichzeitig die Funktion der Schutzfolie, so daß Hilfsmaterial für diesen Zweck eingespart wird. Mit besonderem Vorteil wird die Transferfarbstoff enthaltende Folie schon bei der Herstellung der Kunststofftafel bzw. unmittelbar danach aufgebracht, so daß die Schutzwirkung der Folie vom Zeitpunkt der Herstellung der Kunststofftafel an bis zur Ingebrauchnahme des geformten und gefärbten Kunststoffkörpers erhalten bleibt und kein weiteres flächiges Hilfsmaterial benötigt wird.

Das Verfahren der Erfindung eignet sich zur Herstellung von farbigen bzw. gemusterten, beschrifteten oder in beliebiger Weise dekorierten Kunststofformteilen, die durch Umformen ebener Tafeln herstellbar sind. Flächengleiche zylindrische Umformungen sind ebenso durchführbar wie sphärische Umformungen unter teilweiser Flächendehnung. Zum Beispiel können beleuchtbare Werbeschilder, Verkehrszeichen, Richtungsanzeiger, Gerätegehäuse, Modeartikel, wie Haarspangen oder Schnallen, Verpackungsbehälter oder -Verschlüsse, Leuchtglobushälften, Sportartikel, wie Surfbretter oder Skateboards, Kunststoffkoffer, Fahrzeugausstattungsteile u.ä. erfindungsgemäß hergestellt werden.

Soweit hier von ungefärbten Kunststofftafeln die Rede ist, ist damit der Zustand vor Beginn des Farbstofftransfers gemeint, selbst wenn der Kunststoff schon vorher eine andere Färbung oder Musterung hatte. Der Ausdruck "gefärbt" umfaßt jede durch Transferdruck erzeugbare Farbgebung von einheitlichen oder verlaufenden Färbungen bis zu ein- oder vielfarbigen Musterungen oder Beschriftungen.

Für das Verfahren eignen sich formstabile Kunststofftafeln, soweit sie sich in der Wärme zylindrisch oder sphärisch umformen lassen und nach Abkühlung auf Raumtemperatur die in der Wärme erzeugte Gestalt dauernd beibehalten. Vorzugsweise sind sie bis mindestens 50°C wärmeformbeständig und haben einen E-Modul nicht unter 1 500 Nmm$^{-2}$.

Die Formgebung im thermoelastischen oder thermoplastischen Zustand sollte bei Temperaturen von 50 bis 250°C möglich sein. Bei den für den Farbstofftransfer erforderlichen Temperaturen soll sich der Kunststoff in der Regel nicht in nennenswerter Weise zersetzen. Beispiele geeigneter Kunststoffe sind Polymethylmethacrylat, Polyvinylchlorid, Polystyrol, Polycarbonate, Polysulfonkunststoffe, Polyester, Celluloseester sowie Verbundwerkstofftafeln aus unterschiedlichen Schichten derartiger Kunststoffe. Vorzugsweise sind die Tafeln homogen weiß eingefärbt, weil davon ausgehend jede beliebige Farbgebung möglich ist. Die Tafeln können z.B. 1 bis 15 mm dick sein und beliebige Abmessungen von wenigen Quadratzentimetern bis zu mehreren Quadratmetern haben.

Die als Farbträger für die Transferfarben dienenden Kunststoffolie muß bei der gleichen Temperatur wie die Kunststofftafel zusammen mit dieser verformbar sein. Es schadet nicht, wenn sie bei der Verformungstemperatur deutlich weicher als die Kunststofftafel ist, solange sie sich unter den auftretenden mechanischen Kräften nicht unlösbar mit der Tafel verbindet. Die Abziehbarkeit nach dem Erkalten bleibt im allgemeinen gewährleistet, wenn der Kunststoff der Folie gegenüber demjenigen der Tafel eine geringe Affinität hat. Das ist im allgemeinen der Fall, wenn einer der beiden Kunststoffe reich an polaren und arm an unpolaren Gruppen und der andere mehr oder weniger frei von polaren Gruppen ist. Polyolefine, insbesondere Polyäthylen, sind gegenüber den oben als Beispiele genannten Kunststoffen hinreichend wenig affin. Weiterhin sind Polyesterfolien oft gut geeignet. Die Affinität soll möglichst so gering sein, daß sich die Folie nach dem Erkalten mit geringem Kraftaufwand ohne zu reißen abziehen läßt. Andererseits darf die Affinität auch nicht so gering sein, daß keine ausreichende Haftung erzielt wird. Die Haftung muß so groß sein, daß sich die Folie beim Umformen nicht gegenüber der Tafel verschiebt. Erforderlichenfalls kann die Haftung durch eine Koronabehandlung der an die Tafel anzulegenden Folienoberfläche erhöht werden. Vorzugsweise ist die Folie an dieser Seite mit Transferdruckfarben beschichtet. Die Farbschicht wird nach bekannten Verfahren des Foliendrucks aufgebracht, z.B. durch Offset, Siebdruck oder durch Walzenauftrag. Die Farbe, insbesondere das darin enthaltene Bindemittel, kann das Haftungsverhalten der Folie verändern, insbesondere wenn diese ganz oder zum überwiegenden Teil bedruckt ist. Es ist vorteilhaft, wenn das Bindemittel eine ähnlich geringe Polarität wie die Folie selbst besitzt. Wenn die Druckfarbe eine unerwünscht hohe Haftung bewirken sollte, kann die Folie mit der unbedruckten Seite auf die Kunststofftafel aufgelegt werden, da die Farbstoffe durch Folie hindurch zu diffundieren vermögen.

Die Folie, die in der Regel 40 bis 150 $\mu$m dick ist, wird am besten unter Wärmeanwendung, z.B. mit einer auf 60 bis 100°C erwärmten Walze unter leichtem Druck aufgebracht. Die Folie kann auch auf die Tafel haftend aufgebracht werden, wenn diese eine erhöhte Oberflächentemperatur von z.B. 60 bis 80°C hat. In jedem Falle sollte für eine blasenfreie Folienbeschichtung Sorge getragen werden.

Man kann auch eine mit druckempfindlichem Klebstoff beschichtete Folie verwenden, die ohne Wärmeanwendung auf die Tafel aufgebracht werden kann. Der Farbstofftransfer wird durch die Klebstoffschicht nicht behindert.

Obwohl es möglich ist, gleich nach dem Aufbringen der Folie durch weitere Wärmeanwendung bei einer für den Farbtransfer ausreichenden Temperatur den Farbübergang auf die Tafel zu bewirken, wird es aus wirtschaftlichen Gründen bevorzugt, nach dem Aufbringen der Folie keine zusätzliche Wärmebehandlung mit dem Ziel der Farbübertragung durchzuführen, sondern die beschichtete Tafel erkalten zu lassen, so daß nur soviel Farbe übertragen wird, wie es sich unter den Bedingungen des Folienbeschichtungsvorganges von selbst ergibt.

Zur thermischen Umformung wird die beschichtete Tafel erneut erhitzt. Für sphärische Umformungen muß wenigstens in dem umzuformenden Bereich die Formungstemperatur über die ganze Dicke der Tafel erreicht werden, während es bei zylindrischen Verformungen manchmal genügt, wenn die Formungstemperatur wenigstens bis zur Mitte der Tafeldicke erreicht wird. Die Erwärmung erfolgt zweckmäßig durch Wärmestrahlung oder Heißluft. In diesem Verfahrensstadium wird in der Regel die Hauptmenge der Farbe von der Folie auf die Tafel übertragen. Daher muß wenigstens die Folie eine für den Farbtransfer ausreichende Temperatur erreichen und für die Dauer des Transfervorganges beibehalten.

Viele für das Verfahren der Erfindung geeignete Kunststofftafeln sind im Temperaturbereich von 120 bis 250°C gut umformbar. Der Temperaturbereich, in dem der Kunststoff überwiegend thermoelastische Eigenschaften hat, ist bevorzugt. Er liegt für gegossenes Polymethylmethacrylat etwa zwischen 130 und 200°C, für extrudiertes Polymethylmethacrylat bei 120 bis 180°C. Um diese Temperaturen in kurzer Zeit zu erreichen, wird die Oberfläche der Tafel meistens auf Temperaturen über 200°C erhitzt, wodurch der Farbstofftransfer sehr begünstigt wird. Die Mehrzahl der gebräuchlichen Transferfarbstoffe läßt sich im Temperaturbereich von 150 bis 250°C am besten übertragen. Die üblichen Aufheizzeiten von 1 bis 15 Minuten, je nach der Dicke der zu bedruckenden Tafel, sind in der Regel auch für den Farbstofftransfer ausreichend.

Die Umformung der erwärmten Tafel unter gleichzeitiger Mitformung der Folie erfolgt in an sich bekannter Weise durch ein- oder beidseitig einwirkende Formwerkzeuge, durch einseitigen Über- oder Unterdruck, durch klappbare Spannrahmen u.dergl. Nach der Umformung läßt man das Formteil unter die Erweichungstemperatur abkühlen. Die Folie wird nach dem Ausspannen des Formteils auf dessen Oberfläche belassen und erst abgezogen, wenn das Formteil weiterverarbeitet oder in Gebrauch genommen wird.

## Patentansprüche

1. Verfahren zur Herstellung eines gefärbten, umgeformten Kunststoffteils durch Erhitzen einer ebenen Tafel aus Kunststoff, die auf wenigstens einer Seite mit einer abziehbar haftenden, im erwärmten Zustand dehnbaren Kunststoffolie beschichtet ist, auf die Formungstemperatur der Tafel, Umformen der Tafel unter gleichzeitiger Umformung der daran haftenden Folie und Abkühlen unter die Formungstemperatur,

   dadurch gekennzeichnet,

   daß eine Tafel eingesetzt wird, die mit einer Transferfarbstoff enthaltenden Folie beschichtet ist, und daß während des Erhitzens und/oder Umformens Farbstoff von der Folie auf die Oberfläche der Tafel übertragen wird.

## Claims

1. Process for producing a coloured, shaped plastics part by heating a planar sheet of plastics, coated on at least one side with a removably adhering plastics film which is expandable in the heated state, to the deformation temperature of the sheet, deforming the sheet with simultaneous deformation of the film adhering thereto and cooling to below the deformation temperature, characterised in that a sheet is used which is coated with a film containing transfer dye, and dye is transferred from the film to the surface of the sheet during the heating and/or deformation.

## Revendications

1. Procédé de fabrication d'une pièce en matière plastique mise en forme et colorée, par chauffage, à la temperature de déformation, d'un panneau plan en matière plastique qui est garni, sur l'une au moins de ses faces, d'une feuille de matière plastique qui y adhère de façon arrachable et qui est extensible à l'état réchauffé, puis par formage du panneau avec mise en forme simultanée de la feuille qui y adhère et par refroidissement au-dessous de la température de déformation, caractérisé en ce qu'on met en oeuvre un panneau qui est garni d'une feuille contenant un colorant de transfert, et en ce qu'au cours du chauffage et/ou du formage, du colorant est transféré de la feuille à la surface du panneau.